# EUROPEAN PATENT SPECIFICATION

(11) **EP 2 540 603 B1**
(45) Date of publication and mention of the grant of the patent: **09.03.2016**
(21) Application number: 12173820.7
(22) Date of filing: 27.06.2012
(51) Int. Cl.: B62J 15/00

(54) **SADDLE TYPE VEHICLE**
FAHRZEUG MIT EINEM SATTEL
VÉHICULE DE TYPE À ENFOURCHER

(30) Priority: 29.06.2011 JP 2011144363
(43) Date of publication of application: 02.01.2013
(73) Proprietor: Honda Motor Co., Ltd., Minato-ku Tokyo 107-8556 (JP)
(72) Inventor: Kuwano, Hideki, Saitama, 351-0193 (JP); Uchida, Odai, Saitama, 351-0193 (JP)
(74) Representative: Quinterno, Giuseppe

(56) References cited:
- EP-A2- 0 270 379
- JP-A- H03 253 485
- JP-A- H03 253 486
- JP-A- 2009 067 133

## Description

This invention relates to a saddle type vehicle, and particularly to a saddle type vehicle of the kind defined in the preamble of claim 1.

A saddle type vehicle of that kind is disclosed in JP H03 253485 A.

A similar saddle type vehicle is disclosed in JP H03 253486 A.

It is an object of the present invention to provide an improved saddle type vehicle of the initially defined kind.

A saddle type vehicle according to the invention includes a vehicle body frame including a pair of left and right rear frames and covered with a vehicle body cover, a swing member supported for upward and downward rocking motion on the vehicle body frame at a position below the paired left and right rear frames and extending in a vehicle rearward direction, a rear wheel supported at a rear portion of the swing member, a hydraulic brake supported on the swing member and configured to brake the rear wheel, and a hydraulic pipe connected to the hydraulic brake and disposed along one side of the paired left and right rear frames and further along the swing member for transmitting a hydraulic pressure for operating the hydraulic brake, wherein a frame side supporting portion disposed at an upper portion of the swing member as viewed in a vehicle side view and supporting the hydraulic pipe thereon is provided on the rear frames while a swing arm side supporting portion for supporting the hydraulic pipe thereon is provided on the swing member; the hydraulic pipe includes a first hydraulic pipe extending from a hydraulic pressure generation section to the frame side supporting portion, a flexible tube extending from the frame side supporting portion to the swing arm side supporting portion, and a second hydraulic pipe extending from the swing arm side supporting portion to the hydraulic brake; and the flexible tube is disposed in a curved state to the other side in a left and right vehicle widthwise direction in front of the rear wheel at a position above the swing member and is deflected when the swing member rocks upwardly and downwardly to absorb the rocking motion of the swing member.

The swing member includes a power unit for generating power and a swing arm extending in the vehicle rearward direction from the opposite side of the power unit in the left and right vehicle widthwise direction; the swing arm side supporting portion is provided on the swing arm; and the flexible tube is disposed in the curved state to the other side in the left and right vehicle widthwise direction at the position above the power unit and is deflected when the swing member rocks upwardly and downwardly to absorb the rocking motion of the swing member.

According to the invention as set forth in claim 1 , the power unit is an engine which includes a crankcase and a cylinder projecting in a vehicle forward direction from the crankcase, and a radiator is provided on one side of the crankcase in the vehicle widthwise direction.

According to the invention as set forth in claim 2, a rear fender integrally rockable with the swing member to avoid mud splashed by the rear wheel is provided for the rear wheel and is fastened to the swing member together with the swing arm side supporting portion.

According to the invention as set forth in claim 3, a rear fender integrally rockable with a unit swing to avoid mud splashed by the rear wheel is provided for the rear wheel, and a forward extension which covers a crankcase upper face of the power unit is provided on the rear fender.

According to the invention as set forth in claim 4, the radiator includes a feed-water cap provided at an upper portion thereof.

In the invention as set forth in claim 1, the flexible tube piped between the swing arm side supporting portion and the frame side supporting portion is disposed in a curved state from one side to the other side in the left and right vehicle widthwise direction in front of the rear wheel. In other words, the flexible tube is disposed in a curved state such that it is swollen to the vehicle body center.

When the swing member is rocked, the flexible tube is deflected so as to move toward and away from the center in the vehicle widthwise direction. Since the flexible tube which is likely to be deflected to the center in the vehicle widthwise direction is used, the vehicle body cover can be reduced in size in comparison with a flexible tube which is likely to be deflected in any of the vehicle longitudinal direction and the vehicle widthwise direction. If the vehicle body cover can be reduced in size, then the vehicle body can be reduced in size.

In addition, the flexible tube is disposed such that it is deflected in front of the rear wheel.

If the flexible tube is disposed otherwise such that it is deflected upwardly or sidewardly with respect to the rear frame, then in order to assure a deflection margin, the vehicle height is increased or the vehicle width is increased.

In this regard, in the present invention, since the flexible tube is disposed in front of the rear wheel, a sufficient deflection margin can be assured without increasing the height of the vehicle.

Further, the flexible tube is disposed at the position above the swing member. Since the flexible tube of the hydraulic pipe is disposed utilizing a place above the swing member which is liable to become a dead space, the vehicle body can be made more compact. Furthermore, in the invention as set forth in claim 1, the swing member includes the power unit for generating power and the swing arm extending in the vehicle rearward direction from the one side of the power unit in the left and right vehicle widthwise direction, and the swing arm side supporting portion is provided on the swing arm.

In a unit switch type vehicle, the flexible tube is provided in a curved state from the swing arm provided on the one side in the leftward and rightward vehicle widthwise direction to the other side in front of the rear wheel. In other words, the flexible tube is disposed in a curved state so as to be swollen to the vehicle body center.

When the swing member is rocked, the flexible tube is deflected so as to move toward and away from the vehicle widthwise center. Since the flexible tube which is likely to be deflected to the center in the vehicle widthwise direction, the vehicle body cover can be reduced in size. If the vehicle body cover is reduced in size, then the vehicle body can be reduced in size.

In the invention as set forth in claim 1 , the power unit is the engine, and the radiator is provided sidewardly of the crankcase of the engine.

The hydraulic pipe is disposed above the crankcase which configures the power unit, and the radiator is disposed sidewardly of the crankcase.

Since the hydraulic pipe is piped avoiding the radiator, the influence of heat of the engine becomes less likely to be had on the hydraulic pipe.

In the invention as set forth in claim 2, the rear fender integrally rockable with the swing member to avoid mud is fastened together with the swing arm side supporting portion. Since the rear fender is fastened together with the hydraulic pipe, the number of parts can be reduced in comparison with an alternative case in which the rear fender is fastened to the swing member and the swing arm side supporting portion is fastened to the swing member.

In the invention as set forth in claim 3, the forward extension which covers the crankcase upper face is provided on the rear fender. Generated heat of the crankcase is shielded by the forward extension of the rear fender. Since the power unit and the hydraulic pipe are isolated from each other by the forward extension, it is possible to make it hard to transmit heat of the crankcase to the hydraulic pipe without additionally providing a separate shield member.

In the invention as set forth in claim 4, the radiator includes the feed-water cap provided at the upper portion thereof. Since the feed-water cap is disposed avoiding the hydraulic pipe, it can be caught readily by a hand and a water supplying operation is facilitated. In addition, since the hydraulic pipe is piped so as to avoid the radiator having the feed-water cap, the hydraulic pipe can be caught readily by a hand, and ease of the maintenance of the hydraulic pipe can be enhanced.

Further features and advantages of the invention will become apparent from the following description, provided purely by way of a non-limiting example, with reference to the annexed drawings, wherein:
Fig. 1 is a right side elevational view of a motorcycle according to the present invention;
Fig. 2 is an enlarged view of essential part of Fig. 1;
Fig. 3 is a view illustrating a state in which a radiator cover is removed in Fig. 2;
Fig. 4 is a plan view illustrating a piping relationship of hydraulic pipes;
Fig. 5 is a perspective view illustrating the piping relationship of the hydraulic pipes;
Fig. 6 is a rear elevational view illustrating the piping relationship of the hydraulic pipes;
Fig. 7 is a view as viewed in a direction indicated by an arrow mark 7 of Fig. 2; and
Fig. 8 is an explanatory view of operation of a flexible tube provided at a rear portion of the vehicle.

In the following, an embodiment of the present invention is described in detail. In the figures and the embodiment, "upward," "downward," "forward," "rearward," "leftward" and "rightward" represent directions as viewed from a driver who rides on a motorcycle. It is to be noted that the drawings should be viewed in the direction of reference characters.

An embodiment of the present invention is described with reference to the drawings.

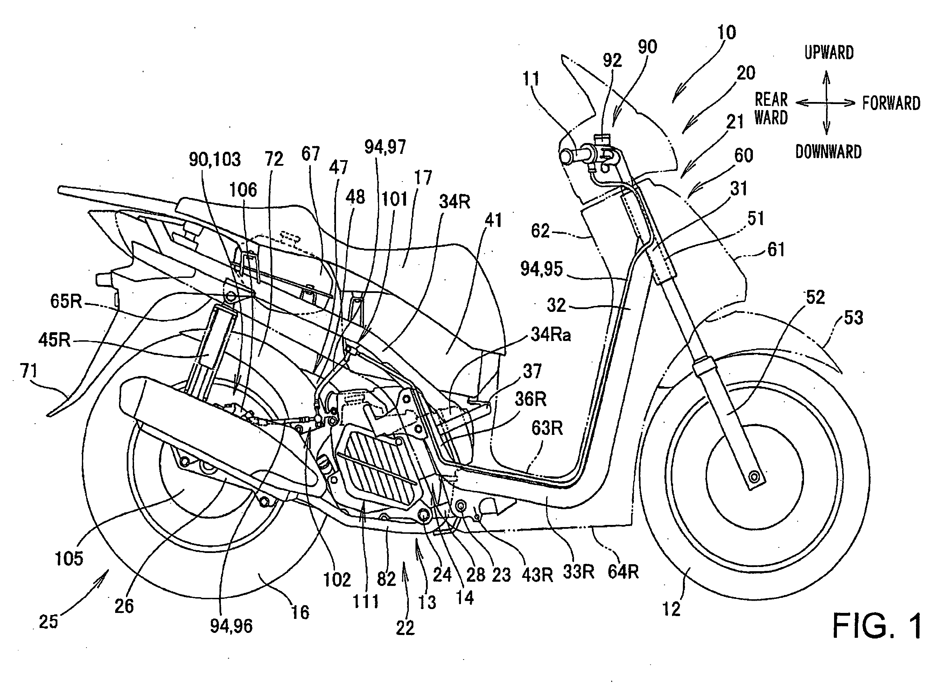

As shown in Fig. 1, a motorcycle 10 is a saddle type vehicle which has a front wheel 12 disposed at a vehicle front portion and provided for steering operation by a handle bar 11, an engine 14 disposed rearwardly of the vehicle with respect to the front wheel 12 and serving as a power unit 13, a rear wheel 16 disposed rearwardly with respect to the engine 14 and driven by the engine 14, and a seat 17 provided between the front wheel 12 and the rear wheel 16, and has a form in which an occupant is seated on and across the seat 17.

The motorcycle 10 is a vehicle wherein it includes a vehicle body frame 20 and a unit swing 22 is supported for rocking motion on the vehicle body frame 20. In particular, a steering system 21 including the handle bar 11 is provided at a front portion of the vehicle body frame 20 and a link pivot 23 is attached to a lower portion of the vehicle body frame 20, and a link 28 is attached to the link pivot 23. A swing arm pivot 24 is provided at a rear portion of the link 28, and the unit swing 22 is attached to the swing arm pivot 24.

The vehicle body frame 20 includes, as principal components thereof, a head pipe 31 having the steering system 21 supported at a front end portion thereof for steering pivotal motion, a down frame 32 extending rearwardly downwards of the vehicle from the head pipe 31, a pair of left and right lower frames 33L and 33R (only the reference character 33R on this side of the figure is shown) extending rearwardly of the vehicle from a lower portion of the down frame 32 and further extending obliquely rearwardly upwards of the vehicle, and rear frames 34L and 34R (only the reference character 34R on this side of the figure is shown) attached to rear end portions of the lower frames 33L and 33R and extending rearwardly upwards of the vehicle.

A U-shaped member 37 which exhibits a substantially U shape as viewed in plan of the vehicle and supports an accommodation box 41 thereon extends between left and right inclined portions 36L and 36R (only the reference character 36R on this side of the figure is shown) which configure portions of the lower frames 33L and 33R which extend rearwardly upwards of the vehicle such that the closing side thereof is positioned forwardly. The left and right rear frames are secured at front ends 34La and 34Ra (only the reference character 34Ra on this side of the figure is shown) thereof to an intermediate portion of the U-shaped member 37. Left and right link brackets 43L and 43R (only the reference character 43R on this side of the figure is shown) each in the form of a plate are secured to the left and right lower frames 33L and 33R, respectively.

On the unit swing 22, the engine 14 as the power unit 13 which generates power is provided integrally. Left and right cushion units 45L and 45R (only the reference character 45R on this side of the figure is shown) are interposed between a rear portion of the unit swing 22 and the vehicle body frame 20. Further, an air cleaner 48 which configures an intake system 47 is provided on the unit swing 22.

The steering system 21 of the motorcycle 10 is configured from a steering shaft 51 provided for rotation at a front end portion of the vehicle body frame 20, a front fork 52 connected to a lower end of the steering shaft 21 for supporting the front wheel 12, and the handle bar 11 attached to an upper end of the steering shaft 51.

The vehicle body frame 20 of the motorcycle 10 is converted with a vehicle body cover 60.

The vehicle body cover 60 has a front cover 61 which covers the vehicle body from forwardly, a center cowl 62 attached to the front cover 61 in such a manner as to cover an upper portion of the center cowl 62 from rearwardly of the vehicle, left and right under covers 64L and 64R (only the reference character 64R on this side of the figure is shown) extending rearwardly of the vehicle from a lower end of the center cowl 62 and having left and right steps 63L and 63R (only the reference character 63R on this side of the figure is shown) for receiving the feet of a rider placed thereon, respectively, and left and right rear side covers 65L and 65R (only the reference character 65R on this side of the figure is shown) extending rearwardly of the vehicle under the seat 17.

Above the engine 14, the accommodation box 41 for receiving an article fitted therein is attached to the left and right rear frames 34L and 34R, and a fuel tank 67 is attached to the left and right rear frames 34L and 34R rearwardly of the vehicle with respect to the accommodation box 41. The seat 17 is placed on the accommodation box 41 and the fuel tank 67 in such a manner as to cover the accommodation box 41 and the fuel tank 67 from above.

The power unit 13 for generating power is included in the unit swing 22 and is supported for upward and downward rocking motion on the vehicle body frame 20 at a position below the paired left and right rear frames 34L and 34R. The unit swing 22 supports the rear wheel 16 at the rear portion thereof.

A front fender 53 for avoiding mud splashed by the front wheel 12 is attached to the front fork 52 above the front wheel 12, and a first rear fender 71 for avoiding mud splashed by the rear wheel 16 is attached to the rear frames 34L and 34R rearwardly upwardly with respect to the rear wheel 16. Meanwhile, a second rear fender 72 integrally rockable with the unit swing 22 for avoiding mud splashed by the rear wheel 16 is attached to the unit swing 22 forwardly upwardly with respect to the rear wheel 16.

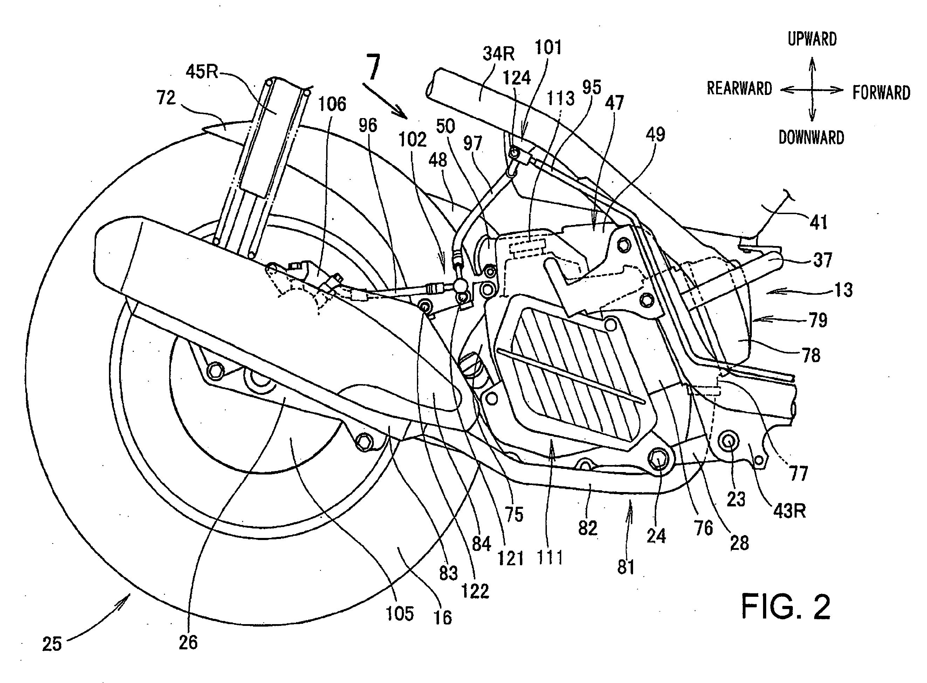

As shown in Fig. 2, the power unit 13 has a crankcase 75, a cylinder 76 (cylinder block 76) projecting forwardly of the vehicle from the crankcase 75, a cylinder head 77 attached to a front end of the cylinder block 76, and a head cover 78 placed over a front end of the cylinder head 77. An engine block 79 which configures a main body of the engine 14 is configured from the crankcase 75, cylinder block 76, cylinder head 77 and head cover 78. The intake system 47 is connected to an upper face of the cylinder head 77, and an exhaust system 81 is connected to a lower face of the cylinder head 77.

The intake system 47 includes, as principal components thereof, a throttle body 49 connected to the cylinder head 77 for adjusting the fuel supply amount, the air cleaner 48 connected to the intake system 47 for supplying clean air, and a connecting tube 50 for connecting the throttle body 49 and the air cleaner 48 to each other.

The exhaust system 81 includes, as principal components thereof, an exhaust pipe 82 extending downwardly from the cylinder head 77 and further extending rearwardly of the vehicle, and a muffler 83 connected to a vehicle rear end of the exhaust pipe 82. The muffler 83 is covered with a muffler cover 84 from outwardly in the vehicle widthwise direction.

Now, a rear wheel brake system is described.

Referring back to Fig. 1, a rear wheel brake 90 is a hydraulic disk brake and is configured from a brake master cylinder 92, a first hydraulic pipe 95, a frame side supporting portion 101, a flexible tube 97, a second hydraulic pipe 96, and a hydraulic brake 103. The brake master cylinder 92 serves as a hydraulic pressure generation section provided on the left side in the vehicle widthwise direction with respect to the handle bar 11 and driven by a left lever not shown. The first hydraulic pipe 95 is piped in order from the brake master cylinder 92 along the head pipe 31, down frame 32, lower frame 33R and rear frame 34R. The frame side supporting portion 101 is provided on the rear frame 34R at a rear end portion of the first hydraulic pipe 95 and disposed at an upper portion of the unit swing 22 as viewed in side elevation of the vehicle and supports a hydraulic pipe 94 thereon. The flexible tube 97 extends from the frame side supporting portion 101 to a swing arm side supporting portion 102 which is provided on a swing arm 26 and supports the hydraulic pipe 94 thereon. The second hydraulic pipe 96 is connected to the flexible tube 97 and extends from the swing arm side supporting portion 102. The hydraulic brake 103 is connected to an end of the second hydraulic pipe 96.

The hydraulic pipe 94 is a pipe for transmitting a hydraulic pressure for operating the rear wheel brake 90 in the form of a hydraulic brake and is connected to the rear wheel brake 90 and piped along the right side rear frame 34R and then along the swing arm 26.

The rear wheel brake 90 is a unit supported on the swing arm 26 for braking the rear wheel 16, and is configured from a brake disk 105 for integrally rotating with the rear wheel 16, and a brake caliper 106 provided at a position at which it can clamp the brake disk 105 and attached to the swing arm 26.

Now, a structure and so forth of a radiator and associated elements are described.

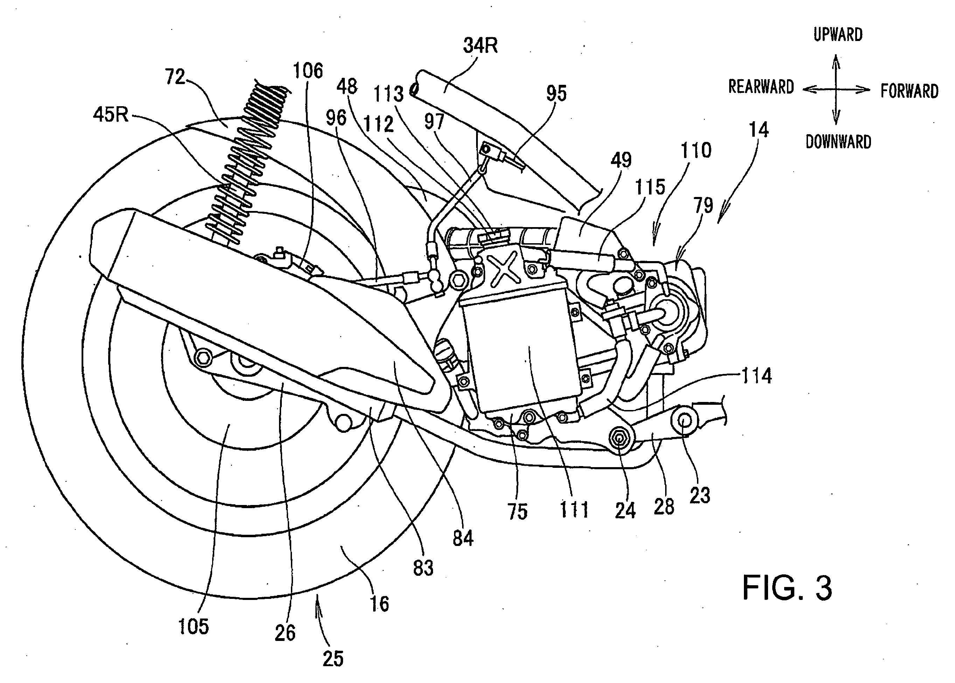

As shown in Fig. 3, an engine cooling section 110 provided for the engine 14 has a radiator unit 111 attached to the crankcase 75 rightwardly sidewardly in the vehicle widthwise direction, and a feed-water inlet 112 provided at an upper portion of the radiator unit 111 for supplementing cooling water therethrough and a feed-water cap 113 for covering the feed-water inlet 112 to open and close the same. The engine cooling section 110 further has a feed pipe 114 extending from a lower portion of the radiator unit 111 for feeding cooling water to the engine block 79, and a return pipe 115 for returning cooling water warmed by the engine 14 to the radiator unit 111.

It is to be noted that the radiator unit may be attached leftwardly sidewardly of the crankcase in the vehicle widthwise direction.

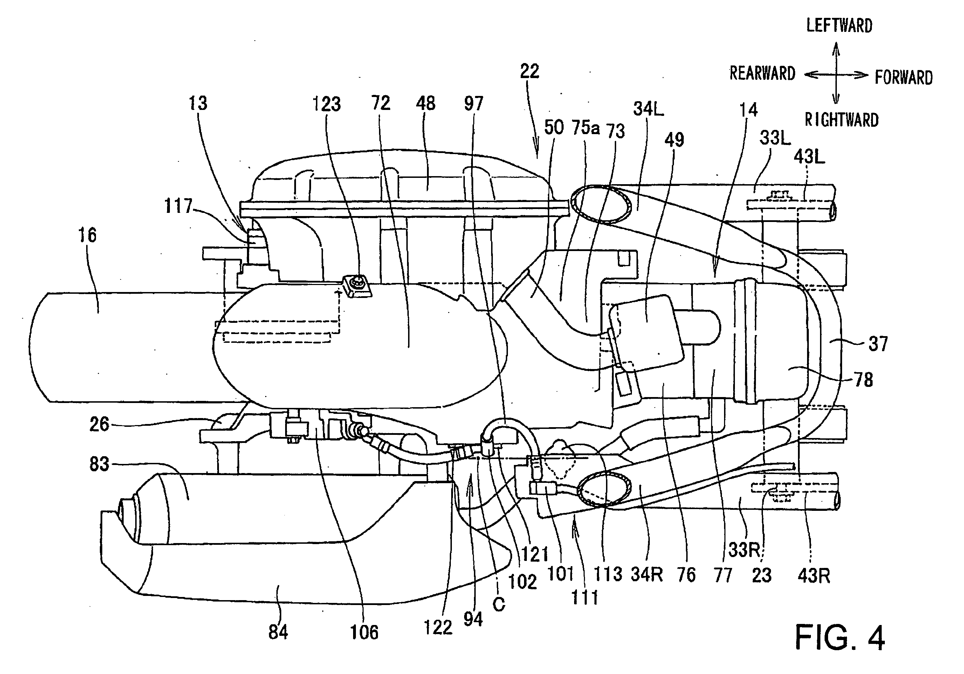

As shown in Fig. 4, the link pivot 23 extending in the vehicle widthwise direction is supported on the left and right link brackets 43L and 43R, and the unit swing 22 extends rearwardly of the vehicle through a swing arm pivot (Fig. 3, reference numeral 24) extending in the vehicle widthwise direction at a rear portion of the vehicle with respect to the link pivot 23.

In the unit swing 22, the power unit 13 including a variable speed transmission 117 extends rearwardly of the vehicle on the left side in the vehicle widthwise direction, and the swing arm 26 extends rearwardly of the vehicle on the right side in the vehicle widthwise direction. The unit swing 22 is configured from the power unit 13 extending rearwardly of the vehicle from the left side in the vehicle widthwise direction, and the swing arm 26 extending rearwardly of the vehicle from the right side in the vehicle widthwise direction. The muffler 83 is attached to the swing arm 26, and the brake caliper 106 is attached.

Above a rear portion of the unit swing 22, the second rear fender 72 provided in such a manner as to cover the rear wheel 16 is fastened to the swing arm 26 on the right side in the vehicle widthwise direction through fastening members 121 and 122 and is fastened to the air cleaner 48 on the left side in the vehicle widthwise direction through a fastening member 123.

The second rear fender 72 has a forward extension 73 provided thereon for covering a crankcase upper face 75a of the power unit 13.

Further, the radiator unit 111 provided on the right side in the vehicle widthwise direction with respect to the engine 14 includes the feed-water cap 113 provided at an upper portion thereof such that it is opened and closed when cooling water is to be supplied. Reference character C in the figure denotes a center line of the feed-water cap 113 in the vehicle widthwise direction.

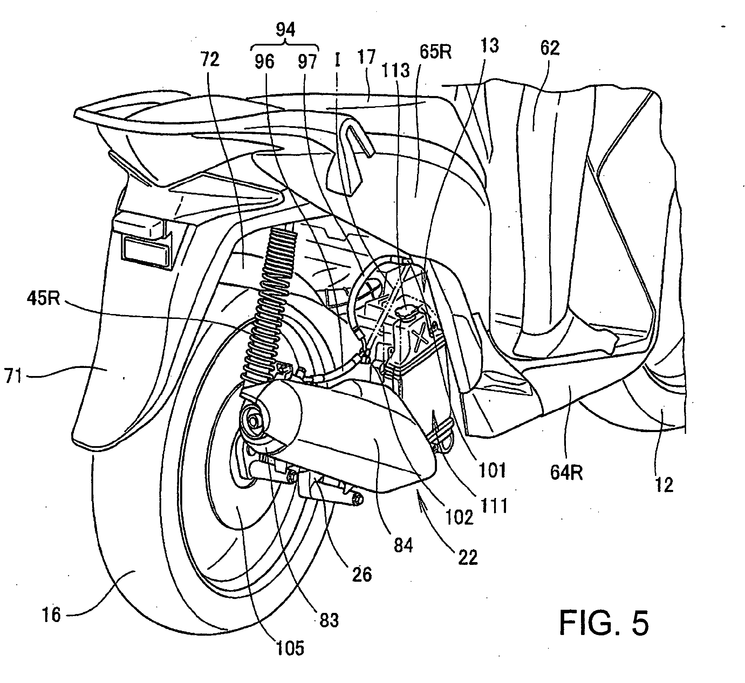

As shown in Fig. 5, the flexible tube 97 extending between the frame side supporting portion 101 and the swing arm side supporting portion 102 is disposed at a position above the power unit 13.

In the figure, an imaginary line I is a line of the flexible tube 97 where it extends linearly between the frame side supporting portion 101 and the swing arm side supporting portion 102. Where the flexible tube 97 extends linearly, it can be disposed in a spaced relationship from the feed-water cap 113, and consequently, it is easy to carry out a mounting or dismounting operation of the feed-water cap 113 or a water supplying operation.

Further, since the swing arm side supporting portion 102 is disposed rearwardly downwards with respect to the frame side supporting portion 101 and besides the flexible tube 97 is curved to the left side in the vehicle widthwise direction which is the other side, when a water supplying operation is carried out, there is no possibility that the vehicle body cover or the like may make an obstacle, and supplying of water from rearwardly upwards can be carried out readily.

Referring also to Fig. 4, the flexible tube 97 is disposed in a curved state to the left side in the vehicle widthwise direction in front of the rear wheel 16 and is deflected, when the unit swing 22 is rocked upwardly and downwardly, to absorb the rocking motion of the unit swing 22.

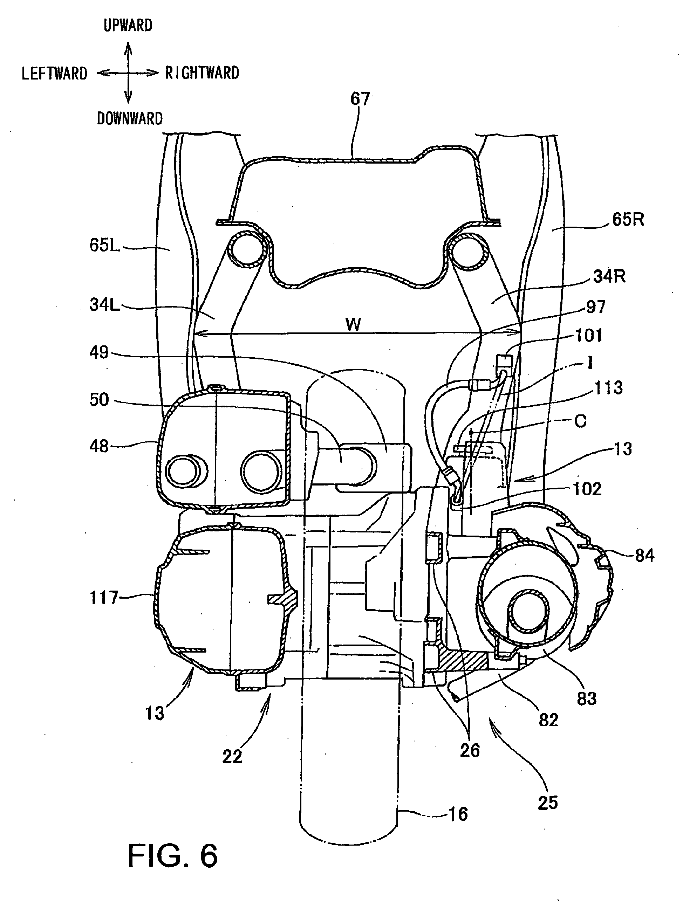

As shown in Fig. 6, a swing member 25 includes the power unit 13, and the swing arm 26 extending rearwardly of the vehicle from the right side in the vehicle widthwise direction which is the opposite side of the power unit 13 in the leftward and rightward direction. The unit swing 22 is configured from the power unit 13 including the variable speed transmission 117 disposed on the left side in the vehicle widthwise direction, and the swing arm 26 disposed on the right side in the vehicle widthwise direction. The variable speed transmission 117 transmits power from the engine 14 to the rear wheel 16 and changes the speed of rotation of the rear wheel 16 steplessly. An internal structure of the variable speed transmission 117 is omitted.

The air cleaner 48 is attached to the top of the variable speed transmission 117, and the muffler 83 is attached to the swing arm 26 outwardly in the vehicle widthwise direction.

In this vehicle, the width W between the left and right rear frames 34L and 34R is made greater to assure the rigidity of the vehicle body frame 20 and the swing arm 26 is displaced to the inner side in the vehicle widthwise direction with respect to the width W between the rear frames 34L and 34R to assure a greater bank angle of the vehicle.

As a result, the frame side supporting portion 101 is disposed on the outer side of the vehicle with respect to the center line C in the vehicle widthwise direction of the feed-water cap 113, and the swing arm side supporting portion 102 is disposed on the inner side of the vehicle with respect to the center line C in the vehicle widthwise direction of the feed-water cap 113. Therefore, although, if the flexible tube 97 is simply disposed linearly, then it becomes very hard to carry out a water supplying operation, in the embodiment, since the flexible tube 97 is spaced away from the feed-water cap 113, the flexible tube 97 is less likely to make an obstacle to a water supplying operation and also the water supplying operability becomes better.

In the figure, the imaginary line I is a line linearly interconnecting the flexible tube 97 between the frame side supporting portion 101 and the swing arm side supporting portion 102. Since the flexible tube 97 can be disposed in a spaced relationship from the feed-water cap 113 in comparison with an alternative case wherein the flexible tube 97 extends linearly, a mounting or dismounting operation of the feed-water cap 113 or a water supplying operation can be carried out readily.

The connecting tube 50 extending from the throttle body 49 to the air cleaner 48 is piped such that it extends to the left side in the vehicle widthwise direction which is the other side, and consequently, the flexible tube 97 is piped in a dead space formed in this manner on the right side in the vehicle widthwise direction which is the one side.

Now, a structure for fastening the rear fender and the swing arm side supporting portion together and so forth are described.

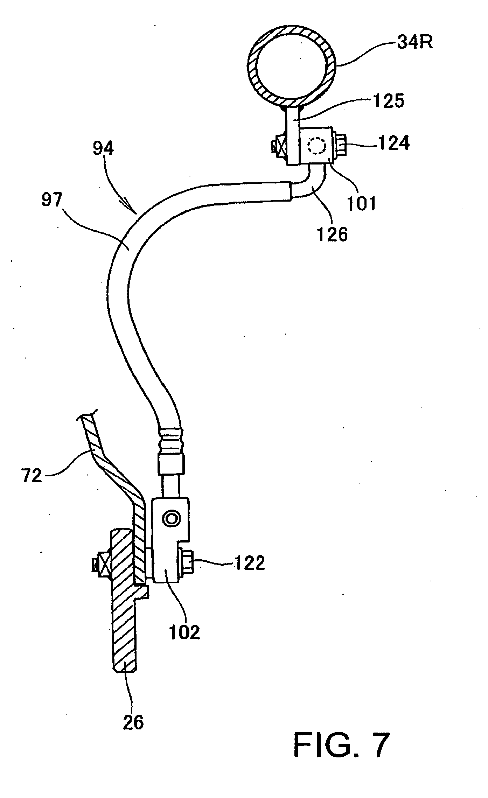

As shown in Fig. 7, the second rear fender 72 is placed on the outer side of the swing arm 26 in the vehicle widthwise direction, and the swing arm side supporting portion 102 is disposed outwardly of the second rear fender 72. Then, the second rear fender 72 and the swing arm side supporting portion 102 are fastened together to the swing arm 26 by the fastening member 122 from outwardly in the vehicle widthwise direction.

Since the second rear fender 72 which rocks integrally with the unit swing 22 to avoid mud is fastened together to the flexible tube 97 which configures the hydraulic pipe 94, the number of parts can be reduced in comparison with that in an alternative case in which the second rear fender 72 and the swing arm side supporting portion 102 are individually fastened to the swing arm 26.

A stay 125 is extended downwardly from the rear frame 34R, and the frame side supporting portion 101 which supports the hydraulic pipe 94 is fastened to the stay 125 by a fastening member 124. The exit of the frame side supporting portion 101 is directed inwardly in the vehicle widthwise direction and has an inwardly directed portion 126 to which the flexible tube 97 is fastened, and this inwardly directed portion 126 makes it easy to direct the flexible tube 97 inwardly in the vehicle widthwise direction.

Operation of the saddle type vehicle described above is described below.

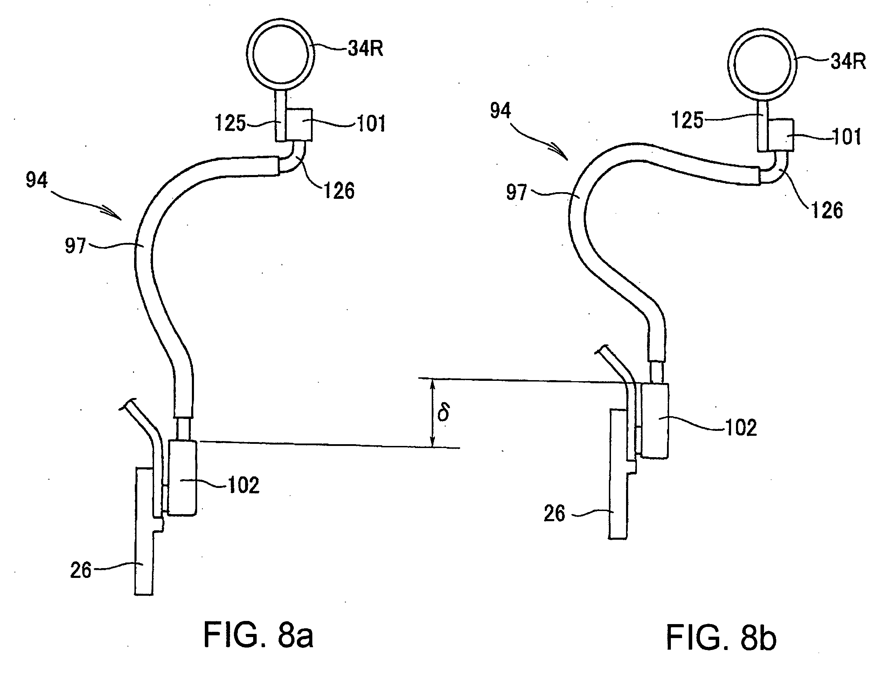

Fig. 8(a) is a view illustrating deflection of the flexible tube 97 when the unit swing (Fig. 5, symbol 22) is rocked to a lower end position.

Fig. 8(b) is a view illustrating deflection of the flexible tube 97 when the unit swing 22 is rocked to an upper end position.

In particular, when the unit swing 22 is rocked, the swing arm 26 which configures the unit swing 22 moves upwardly by a length δ, and the flexible tube 97 connected to the inwardly directed portion 126 and piped between the swing arm side supporting portion 102 and the frame side supporting portion 101 is disposed in a curved state to the left side in the vehicle widthwise direction.

Referring also to Fig. 5, when the unit swing 22 is rocked, the flexible tube 97 disposed in a curved state to the left side in the vehicle widthwise direction is deflected toward the center in the vehicle widthwise direction. Where the flexible tube 97 is deflected to the center in the vehicle widthwise direction, since a large rocking space need not be assured in the vehicle longitudinal direction, the vehicle body can be reduced in size without making the vehicle body covers 65L and 65R greater outwardly in the vehicle longitudinal direction and/or the vehicle widthwise direction.

Further, the flexible tube 97 is disposed at a position above the power unit 13. Since the place above the power unit 13 which is likely to become a dead space is utilized to dispose the flexible tube 97 of the hydraulic pipe 94 therein, further compaction of the vehicle body can be anticipated.

The flexible tube 97 is disposed in such a manner as to be deflected in the vehicle widthwise direction forwardly of the rear wheel 16.

If the flexible tube is disposed otherwise above the rear wheel, then the vehicle height becomes great because the room for the deflection in the vehicle widthwise direction is assured.

In this connection, in the present invention, since the flexible tube 97 is disposed forwardly of the rear wheel 16, a sufficient deflection room can be assured without making the vehicle height great.

The radiator 111 includes the feed-water cap 113 provided at an upper portion thereof. Since the feed-water cap 113 is disposed in such a manner as to avoid the hydraulic pipe 94 (flexible tube 97), the feed-water cap 113 can be caught readily by a hand and a water supplying operation is facilitated. In addition, since the hydraulic pipe 94 is piped so as to avoid the radiator 111, the hydraulic pipe 94 can be caught readily by a hand, and ease of the maintenance of the hydraulic pipe 94 can be enhanced.

Referring back to Fig. 4, the power unit 13 includes the engine 14, and the radiator unit 111 (radiator 111) is provided sidewardly of the crankcase 75 of the engine 14. The hydraulic pipe 94 is disposed above the crankcase 75 which configures the power unit 13, and the radiator 111 is disposed sidewardly of the crankcase 75.

Since the hydraulic pipe 94 is piped so as to avoid the radiator 111, the influence of heat of the engine 14 is less likely to be had on the hydraulic pipe 94.

Further, the second rear fender 72 which configures the rear fender includes the forward extension 73 which covers the crankcase upper face 75a. Heat generation of the crankcase 75 is shielded by the forward extension 73 of the second rear fender 72. Since the power unit 13 and the hydraulic pipe 94 are isolated from each other by the forward extension 73, it is possible to make it less likely to transmit heat of the crankcase 75 to the hydraulic pipe 94 without addition of a separate shielding member.

It is to be noted that, while, in the embodiment, the present invention is applied to a motorcycle, it can be applied also to a three wheeled vehicle, and the present invention may be applied to general saddle type vehicles.

The present invention can be applied suitably to a motorcycle which includes a hydraulic brake for a rear wheel.

### Main reference symbols:

13 ... Power unit,
14 ... Engine,
16 ... Rear wheel,
20 ... Vehicle body frame,
22 ... Unit swing,
25 ... Swing member,
26... Swing arm,
34L, 34R ... Rear frame,
60 ... Vehicle body cover,
72 ... Rear fender (second rear fender),
73 ... Forward extension,
75 ... Crankcase,
75a ... Crankcase upper face,
76 ... Cylinder,
94 ... Hydraulic pipe,
95 ... First hydraulic pipe,
96 ... Second hydraulic pipe,
97 ... Flexible tube,
101 ... Frame side supporting portion,
102 ... Swing arm side supporting portion,
103 ... Hydraulic brake,
111 ... Radiator (radiator unit),
113 ... Feed-water cap

## Claims

1. A saddle type vehicle including a vehicle body frame (20) including a pair of left and right rear frames (34L, 34R) and covered with a vehicle body cover (60), a swing member (25) supported for upward and downward rocking motion on said vehicle body frame (20) at a position below the paired left and right rear frames (34L, 34R) and extending in a vehicle rearward direction, a rear wheel (16) supported at a rear portion of said swing member (25), a hydraulic brake (103) supported on said swing member (25) and configured to brake said rear wheel (16), and a hydraulic pipe (94) connected to said hydraulic brake (103) and disposed along one side of the paired left and right rear frames (34L, 34R) and further along said swing member (25) for transmitting a hydraulic pressure for operating said hydraulic brake (103), wherein:
a frame side supporting portion (101) disposed at an upper portion of said swing member (25) as viewed in a vehicle side view and supporting said hydraulic pipe (94) thereon is provided on the rear frames (34L, 34R) while a swing arm side supporting portion (102) for supporting said hydraulic pipe (94) thereon is provided on said swing member (25);
said hydraulic pipe (94) includes a first hydraulic pipe (95) extending from a hydraulic pressure generation section to said frame side supporting portion (101), a flexible tube (97) extending from said frame side supporting portion (101) to said swing arm side supporting portion (102), and a second hydraulic pipe (96) extending from said swing arm side supporting portion (102) to said hydraulic brake (103);
said flexible tube (97) is disposed in a curved state to the other side in a left and right vehicle widthwise direction in front of said rear wheel (16) at a position above said swing member (25) and is deflected when said swing member (25) rocks upwardly and downwardly to absorb the rocking motion of said swing member (25);
said swing member (25) includes a power unit (13) for generating power and a swing arm (26) extending in the vehicle rearward direction from the one side of said power unit (13) in the left and right vehicle widthwise direction;
said swing arm side supporting portion (102) is provided on said swing arm (26); and
said flexible tube (97) is disposed in the curved state to the other side in the left and right vehicle widthwise direction at the position above said power unit (13) and is deflected when said swing member (25) rocks upwardly and downwardly to absorb the rocking motion of said swing member (25);
the saddle type vehicle (10) being **characterized in that** said power unit (13) is an engine (14) which includes a crankcase (75) and a cylinder (76) projecting in a vehicle forward direction from said crankcase (75), and a radiator (111) is provided on one side of said crankcase (75) in the vehicle widthwise direction.

2. The saddle type vehicle according to claim 1, wherein a rear fender (72) integrally rockable with said swing member (25) to avoid mud splashed by said rear wheel (16) is provided for said rear wheel (16) and is fastened to said swing member (25) together with said swing arm side supporting portion (102).

3. The saddle type vehicle according to claim 1, wherein a rear fender (72) integrally rockable with a unit swing (22) to avoid mud splashed by said rear wheel (16) is provided for said rear wheel (16), and a forward extension (73) which covers a crankcase upper face (75a) of said power unit (13) is provided on said rear fender (72).

4. The saddle type vehicle according to any of the preceding claims , wherein said radiator (111) includes a feed-water cap (113) provided at an upper portion thereof.

## Patentansprüche

1. Fahrzeug von auf einem Sattel zu fahrenden Typ umfassend einen Fahrzeugkörperrahmen (20) umfassend ein Paar von linken und rechten hinteren Rahmen (34L, 34R) und mit einem Fahrzeugkörperdeckel (60) bedeckt, ein Schwenkelement (25), das für eine nach oben und nach unten gerichtete Schaukelbewegung an dem Fahrzeugkörperrahmen (20) an einer Position unterhalb der gepaarten linken und rechten hinteren Rahmen (34L, 34R) gehaltert ist und sich in einer Fahrzeug-hinten-Richtung erstreckt, ein Hinterrad (16), das an einem hinteren Teil von dem Schwenkelement (25) gehaltert ist, eine hydraulische Bremse (103), die an dem Schwenkelement (25) gehaltert ist und konfiguriert ist, um das Hinterrad (16) zu bremsen und eine Hydraulikleitung (94), die mit der Hydraulikbremse (103) verbunden ist und entlang einer Seite der gepaarten linken und rechten hinteren Rahmen (34L, 34R) und ferner entlang des Schwenkelements (25) zum Übertragen eines hydraulischen Drucks zum Betreiben der Hydraulikbremse (103), angeordnet ist, wobei:
ein Rahmen-Seiten-Stütz-Teil (101), das an einem oberen Teil von dem Schwenkelement (25) angeordnet ist, in einer Fahrzeugseitenrichtung gesehen, und die Hydraulikleitung (94) daran haltert, an dem hinteren Rahmen (34L,34R) bereitgestellt ist, während ein Schwenkarm-Seiten-Stütz-Teil (102) zum Haltern der Hydraulikleitung (94) daran an dem Schwenkelement (25) bereitgestellt ist;
die Hydraulikleitung (94) eine erste Hydraulikleitung (95), die sich von einem hydraulischen Druck-Erzeugungs-Abschnitt zu dem Rahmen-Seiten-Stütz-Teil (101) erstreckt, ein flexibles Rohr (97), das sich von dem Rahmen-Seiten-Stütz-Teil (101) zu dem Schwenkarm-Seiten-Stütz-Teil (102) erstreckt und eine zweite Hydraulikleitung (96), die sich von dem Schwenkarm-Seiten-Stütz-Teil (102) zu der Hydraulikbremse (103) erstreckt, umfasst;
das flexible Rohr (97) in einem gebogenen Zustand zu der anderen Seite in einer linken und rechten Fahrzeugbreitenrichtung vor dem Hinterrad (16) an einer Position über dem Schwenkelement (25) angeordnet ist und abgebogen ist, wenn das Schwenkelement (25) nach oben und unten schaukelt, um die Schaukelbewegung von dem Schwenkelement (25) zu absorbieren;
das Schwenkelement (25) eine Leistungseinheit (13) zum Erzeugen von Leistung und einen Schwenkarm (26), der sich in der Fahrzeug-hinten-Richtung von der einen Seite der Leistungseinheit (13) in der linken und rechten Fahrzeugbreitenrichtung erstreckt, umfasst;
der Schwenkarm-Seiten-Stütz-Teil (102) an dem Schwenkarm (26) bereitgestellt ist; und
das flexible Rohr (97) in dem gebogenen Zustand zu der anderen Seite in der linken und rechten Fahrzeugbreitenrichtung an der Position über der Leistungseinheit (13) angeordnet ist und abgebogen wird, wenn das Schwenkelement (25) nach oben und unten schaukelt, um die Schaukelbewegung des Schwenkelements (25) zu absorbieren;
das Fahrzeug von auf einem Sattel zu fahrenden Typ (10) **dadurch gekennzeichnet ist, dass** die Leistungseinheit (13) ein Motor (14) ist, der ein Motorgehäuse (75) und einen Zylinder (76) umfasst, der in einer Fahrzeug-Vorwärtsrichtung von dem Motorgehäuse (75) herausragt und dass ein Kühler (111) an einer Seite von dem Motorgehäuse (75) in der Fahrzeugbreitenrichtung bereitgestellt ist.

2. Fahrzeug von auf einem Sattel zu fahrenden Typ nach Anspruch 1, wobei ein hinteres Schutzblech (72) integral schaukelbar mit dem Schwenkelement (25) für das Hinterrad (16) bereitgestellt ist, um Dreck zu vermeiden, der durch das Hinterrad (16) verspritzt wird, und an dem Schwenkelement (25) zusammen mit dem Schwenkarm-Seiten-Stütz-Teil (102) befestigt ist.

3. Fahrzeug von auf einem Sattel zu fahrenden Typ nach Anspruch 1, wobei ein hinteres Schutzblech (72) integral schaukelbar mit einer Einheitsverschwenkung (22) für das Hinterrad (16) bereitgestellt ist, um Dreck zu vermeiden, der durch das Hinterrad (16) verspritzt wird, und eine nach vorne gerichtete Verlängerung (73), die eine Motorgehäuseoberseite (75a) von der Leistungseinheit (13) bedeckt, an dem hinteren Schutzblech (72) bereitgestellt ist.

4. Fahrzeug von auf einem Sattel zu fahrenden Typ nach einem der vorhergehenden Ansprüche, wobei der Kühler (111) eine Speisewasserabdeckung (113) umfasst, die an einem oberen Teil davon bereitgestellt ist.

## Revendications

1. Véhicule d'un type à selle comprenant un châssis de véhicule (20) comprenant une paire de cadres arrière gauche et droit (34L, 34R) et couvert d'un carénage de châssis de véhicule (60), un élément oscillant (25) supporté en vue d'un mouvement de balancement vers le haut et le bas sur ledit châssis de véhicule (20) dans une position située en dessous de la paire de cadres arrière gauche et droit (34L, 34R) et s'étendant vers l'arrière du véhicule, une roue arrière (16) supportée sur une partie arrière dudit élément oscillant (25), un frein hydraulique (103) supporté sur ledit élément oscillant (25) et configuré pour freiner ladite roue arrière (16), et un tuyau hydraulique (94) relié audit frein hydraulique (103) et disposé le long d'un côté de la paire de cadres arrière gauche et droit (34L, 34R) et au-delà le long dudit élément oscillant (25) pour transmettre une pression hydraulique afin d'actionner ledit frein hydraulique (103), dans lequel :
une partie de support latéral de cadre (101) disposée sur une partie supérieure dudit élément oscillant (25) dans une vue de côté du véhicule et supportant ledit tuyau hydraulique (94) est prévue sur les cadres arrière (34L, 34R) tandis qu'une partie de support latéral de bras oscillant (102) pour supporter ledit tuyau hydraulique (94) est prévue sur ledit élément oscillant (25) ;
ledit tuyau hydraulique (94) comprend un premier tuyau hydraulique (95) qui s'étend d'une section générant une pression hydraulique à ladite partie de support latéral de cadre (101), un tube flexible (97) s'étendant de ladite partie de support latéral de cadre (101) à ladite partie de support latéral de bras oscillant (102), et un second tuyau hydraulique (96) s'étendant de ladite partie de support latéral de bras oscillant (102) audit frein hydraulique (103) ;
ledit tube flexible (97) est disposé dans l'état incurvé vers l'autre côté dans le sens de la largeur à gauche et à droite du véhicule devant ladite roue arrière (16) dans une position située au-dessus dudit élément oscillant (25) et est défléchi quand ledit élément oscillant (25) se balance vers le haut et le bas afin d'absorber le mouvement de bascule dudit élément oscillant (25) ;
ledit élément oscillant (25) comprend une unité de puissance (13) pour générer une puissance et un bras oscillant (26) qui s'étend vers l'arrière du véhicule à partir d'un côté de ladite unité de puissance (13) dans le sens de la largeur à gauche et à droite du véhicule ;
ladite partie de support latéral de bras oscillant (102) est prévue sur ledit bras oscillant (26) ; et
ledit tube flexible (97) est disposé dans l'état incurvé vers l'autre côté dans le sens de la largeur à gauche et à droite du véhicule dans la position située au-dessus de ladite unité de puissance (13) et est défléchi quand ledit élément oscillant (25) se balance vers le haut et le bas afin d'absorber le mouvement de bascule dudit élément oscillant (25) ;
le véhicule d'un type à selle (10) étant **caractérisé en ce que** ladite unité de puissance (13) est un moteur (14) qui comprend un carter de vilebrequin (75) et un cylindre (76) qui dépasse dudit carter de vilebrequin (75) vers l'avant du véhicule, et un radiateur (111) est prévu d'un côté dudit carter de vilebrequin (75) dans le sens de la largeur du véhicule.

2. Véhicule d'un type à selle selon la revendication 1, dans lequel un garde-boue arrière (72) pouvant se balancer d'un seul tenant avec ledit élément oscillant (25) afin d'éviter la projection de boue par la ladite roue arrière (16) est prévu pour ladite roue arrière (16) et fixé audit élément oscillant (25) en même temps que ladite partie de support latéral de bras oscillant (102).

3. Véhicule d'un type à selle selon la revendication 1, dans lequel un garde-boue arrière (72) pouvant se balancer d'un seul tenant avec un balancier unitaire (22) afin d'éviter la projection de boue par la ladite roue arrière (16) est prévu pour ladite roue arrière (16), et une rallonge vers l'avant (73) couvrant une face supérieure du carter de vilebrequin (75a) de ladite unité de puissance (13) est prévu sur ledit garde-boue arrière (72).

4. Véhicule d'un type à selle selon l'une des revendications précédentes, dans lequel ledit radiateur (111) comprend un capuchon d'arrivée d'eau d'alimentation (113) prévu sur sa partie supérieure.
